# EUROPÄISCHE PATENTSCHRIFT

(11) **EP 2 167 833 B1**
(45) Veröffentlichungstag und Bekanntmachung des Hinweises auf die Patenterteilung: **20.06.2012**
(21) Anmeldenummer: 08735937.8
(22) Anmeldetag: 08.04.2008
(51) Int. Cl.: F16D 55/226, F16D 55/00

(54) **SCHEIBENBREMSE MIT EINER FEDERANORDNUNG**
DISC BRAKE WITH A SPRING ARRANGEMENT
FREIN À DISQUE COMPRENANT UN ENSEMBLE RESSORT

(30) Priorität: 15.06.2007 DE 102007027555
(43) Veröffentlichungstag der Anmeldung: 31.03.2010
(73) Patentinhaber: Continental Teves AG & Co. OHG, 60488 Frankfurt (DE)
(72) Erfinder: REHM, Joachim, 65931 Frankfurt/M (DE)
(86) Internationale Anmeldenummer: PCT/EP2008/054208
(87) Internationale Veröffentlichungsnummer: WO 2008/151864

(56) Entgegenhaltungen:
- DE-A1- 4 015 167
- DE-A1- 10 004 181
- DE-A1- 10 159 328
- DE-A1- 10 318 019

## Beschreibung

Die Erfindung betrifft eine Scheibenbremse mit einer Federanordnung gemäß dem Oberbegriff des Patentanspruchs 1. Dabei umfasst die Scheibenbremse einen Bremssattel mit einem fahrzeugfesten Halter, an dem mindestens ein Bremsbelag und ein Sattelgehäuse in einer Axialrichtung verschiebbar gelagert sind. Das Sattelgehäuse weist einen axial inneren Gehäuseschenkel und einen äußeren Gehäuseschenkel auf. Weiterhin ist die Federanordnung zur Erzeugung einer elastischen Vorspannkraft in einer Radialrichtung zwischen dem Halter und dem Sattelgehäuse vorgesehen, die an einer Befestigungsfläche des äußeren Gehäuseschenkels und zwischen den Gehäuseschenkeln derart angeordnet ist, dass ein Teil der Federanordnung von dem äußeren Gehäuseschenkel verdeckt ist. Die Federanordnung umfasst mindestens einen Befestigungsabschnitt und einen Federarm.

Bei modernen Fahrzeugen werden die Felgen transparenter und filigraner, wodurch die Bremsen besser zu sehen sind. Dabei erkennt der Fahrzeugbenutzer auch die Federanordnung, welche das Sattelgehäuse des Bremssattels mit dem Halter verspannt und somit ein mögliches Klappern der Bremsbeläge in der Bremse verhindert. Diese Federanordnungen greifen in der Regel an der Außenseite des äußeren Gehäuseschenkels an und reichen durch entsprechende Öffnungen in dem Sattelgehäuse axial nach innen unter die Arme des Halters. Das hierdurch gebildete zerklüftete Aussehen der Bremssättel ist zum Teil unerwünscht. Vielmehr wird angestrebt, dass die Bremse von außen wie ein einheitliches, integriertes Bauelement wirkt, dessen einzelne, die Bremsenfunktionen erzielenden Bauteile für den Betrachter des Fahrzeuges möglichst wenig erkennbar sind.

Eine solche Scheibenbremse ist aus der DE 101 59 328 A1 oder DE 103 18 19 A1 bekannt, bei welcher die Federanordnung nicht an der Außenseite des äußeren Gehäuseschenkels angreift, sondern der Angriffspunkt der Federanordnung auf die Innenseite des Gehäuseschenkels verlegt ist. Hierdurch kann die Federanordnung mit ihren Enden unmittelbar von unten her an die Arme des Halters angreifen. Es wird somit vermieden, dass die Federanordnung durch Öffnungen in dem Gehäuseschenkel axial nach innen unter die Arme des Halters greifen muss. Auf diese Weise wird die Feder im Wesentlichen von dem äußeren Gehäuseschenkel verdeckt. Bei dieser Ausführung kann sich die Montage der Federanordnung kompliziert gestalten.

Es ist eine Aufgabe der Erfindung eine Scheibenbremse und eine Federanordnung anzugeben, welche unter anderem die Nachteile des Stands der Technik vermeidet und eine verbesserte Alternative, insbesondere bezüglich der Verliersicherheit und Montage der Federanordnung, bereitstellt.

Die Aufgabe wird für eine Scheibenbremse erfindungsgemäß mit den kennzeichnenden Merkmalen des Patentanspruchs 1 und für eine entsprechende Federanordnung mit den kennzeichnenden Merkmalen vom Patentanspruch 5 gelöst. Dabei verläuft der Befestigungsabschnitt im Prinzip zumindest teilweise parallel zur Befestigungsfläche, welche an einer dem inneren Gehäuseschenkel abgewandten Außenseite des äußeren Gehäuseschenkels angeordnet ist. Indem der Befestigungsabschnitt teilweise parallel zur Befestigungsfläche des äußeren Gehäuseschenkels ausgebildet ist, schmiegt sich die Federanordnung mit dem Befestigungsabschnitt großflächig an den Gehäuseschenkel an, und ist sowohl durch Befestigungsmittel und durch die Anlage an der Befestigungsfläche am Gehäuseschenkel festgelegt. Zudem kann die Federanordnung einfach montiert werden, da die Befestigungsfläche als Orientierung bei einer Montage dient. Der flächige Kontakt zwischen Federanordnung und Gehäuseschenkel dient als eine Sicherung gegen ein Kippen der Federanordnung.Weiterhin ist erfindungsegemäß im Gehäuseschenkel eine Hinterschneidung vorgesehen. Zudem ist am Befestigungsabschnitt eine in Axialrichtung verlaufende Biegelippe angeordnet, wobei die Biegelippe in die Hinterschneidung eingreift und die Federanordnung durch die Biegelippe in Radialrichtung abgestützt ist. Dies trägt dazu bei, dass die Montage der Federanordnung besonders einfach ausfällt wobei eine Abstützlippe in Axialrichtung entgegengesetzt zur Biegelippe verläuft, und auf diese Weise die Federanordnung in Radialrichtung am Gehäuse abstützt und ein Verdrehen der Federanordnung verhindert. Diese Konstellation von Biegelippe und Abstützlippe macht es möglich die Federanordnung am Bremssattel zu montieren, ohne dass zusätzliche Verbindungsmittel verwendet werden müssen, da die Biegelippen die Reaktionskraft der Federarme ableiten, und die Abstützlippe das Kippmoment, welches durch den axialen Versatz der Federarme und des Befestigungsabschnittes hervorgerufen wird, kompensiert.

Für den Straßengebrauch der Scheibenbremse erweist es sich als günstig, wenn Befestigungsmittel zum Verbinden der Federanordnung an der Befestigungsfläche vorgehen sind. Durch die oben beschriebene Ausprägung der Federanordnung mit der Biegelippe und der Abstützlippe gestaltet sich die Montage sehr einfach, denn die Federanordnung kann dadurch an dem Bremssattel eingehängt werden, ohne dass diese wegen der unterschiedlichen und versetzten Kraftansatzpunkte aus einer definierten Position kippt. Im Folgenden wird die Federanordnung mit dem Befestigungsmittel, beispielsweise mit einer Schraube, fest mit dem Sattelgehäuse verbunden.

Wenn an der dem inneren Gehäuseschenkel abgewandten Außenseite des äußeren Gehäuseschenkels eine Schutzblende vorgesehen wird, die ein Fenster in dem Gehäuseschenkel abdeckt, dann erweist sich die erfindungsgemäße Ausprägung der Federanordnung als vorteilhaft. Dies ist der Fall, da die Schutzblende und die Federanordnung mit einem gemeinsamen Befestigungsmittel an dem äußeren Gehäuseschenkel befestigbar sind.

Weitere Einzelheiten der Erfindung gehen aus den Zeichnungen anhand der Beschreibung hervor.

In den Zeichnungen zeigt
- Fig. 1: eine perspektivische Teilschnittansicht einer Scheibenbremse mit einer Federanordnung,
- Fig. 2: eine perspektivische Ansicht auf die Federanordnung der Scheibenbremse aus Fig. 1,
- Fig. 3: einen Schnitt durch die Scheibenbremse gemäß Fig. 1, und
- Fig. 4: eine perspektivische Ansicht auf eine Scheibenbremse gemäß Fig. 1, wobei zusätzliche eine Schutzblende dargestellt ist.

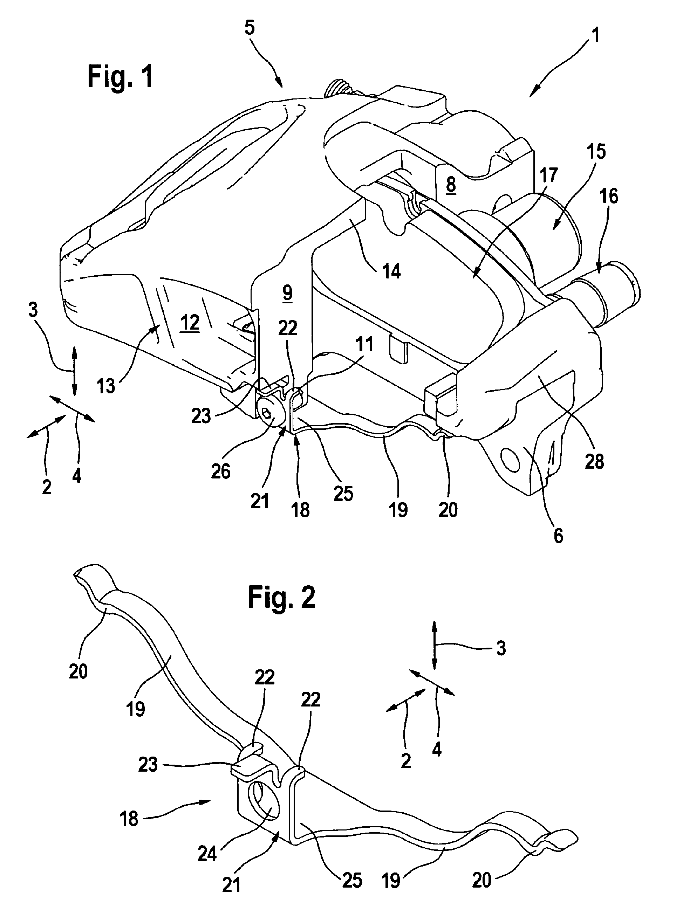

Fig. 1 zeigt eine Ansicht eines Ausführungsbeispiels einer Scheibenbremse 1 mit einem Bremssattel 5, der in montiertem Zustand eine hier nicht dargestellte Bremsscheibe axial umgreift. Diese Bremsscheibe ist um eine Achse drehbar gelagert, welche im Folgenden verwendete Axialrichtung 2, Radialrichtung 3 und Umfangsrichtung 4 definieren soll. Der Bremssattel 5 umfasst einen fahrzeugfesten Halter 6 und ein Sattelgehäuse 7 in Rahmenausführung, wobei auch eine Ausführung ohne Rahmengehäuse denkbar ist. Das Sattelgehäuse 7 weist einen axial inneren Gehäuseschenkel 8, der unter anderem eine Betätigungsvorrichtung 15 beinhaltet und im verbauten Zustand dem Fahrzeug zugewandt ist. Außerdem umfasst das Sattelgehäuse 7 eine Gehäusebrücke 14, die einen axial äußeren Gehäuseschenkel 9 mit dem inneren Gehäuseschenkel 8 verbindet. Das Sattelgehäuse 7 ist unter Verwendung einer Bolzenführung 16 an dem Halter 6 in Axialrichtung 2 der Bremsscheibe verschiebbar gelagert. Zwischen dem Halter 6 und dem Sattelgehäuse 7 sind Bremsbeläge 17 vorgesehen. Eine Federanordnung 18 verspannt das Sattelgehäuse 7 über die Bremsbeläge 17 mit dem Halter 6. Die Federanordnung 18 kann grob in einen Befestigungsabschnitt 21 und in zwei Federarme 19 unterteilt werden und ist an einer Befestigungsfläche 10 des äußeren Gehäuseschenkels 9 montiert.

Die Federarme 19 drücken gegen die Halterarme 28 des Halters 6, und erzeugen so die Vorspannkraft Fᵥ. Der Befestigungsabschnitt 21 der Federanordnung 18 verläuft im Wesentlichen senkrecht auf die Federarme 19 und schmiegt sich parallel an die Befestigungsfläche 10 an. Ein Befestigungsmittel 26 ist am Gehäuseschenkel 9 vorgesehen, greift in eine Aufnahme 24 der Federanordnung 18, und legt so diese fest. Als Befestigungsmittel 26 sind Schrauben, Pressbolzen oder Stifte denkbar, die sowohl an dem Gehäuseschenkel 9 oder an der Federanordnung 18 stoff-, form- oder reibschlüssig vorgesehen sein können. Die Federanordnung 18 ist in diesem Ausführungsbeispiel nur teilweise durch den äußeren Gehäuseschenkel 9 verdeckt, wobei die Federarme 19 und von außen im Wesentlichen nicht einsehbar sind. Dies hat den Vorteil, dass die Außenseite 13 des Bremssattels 5 als optisch harmonische Einheit erscheint, und zudem die Federanordnung 18 gegen Schläge geschützt ist.

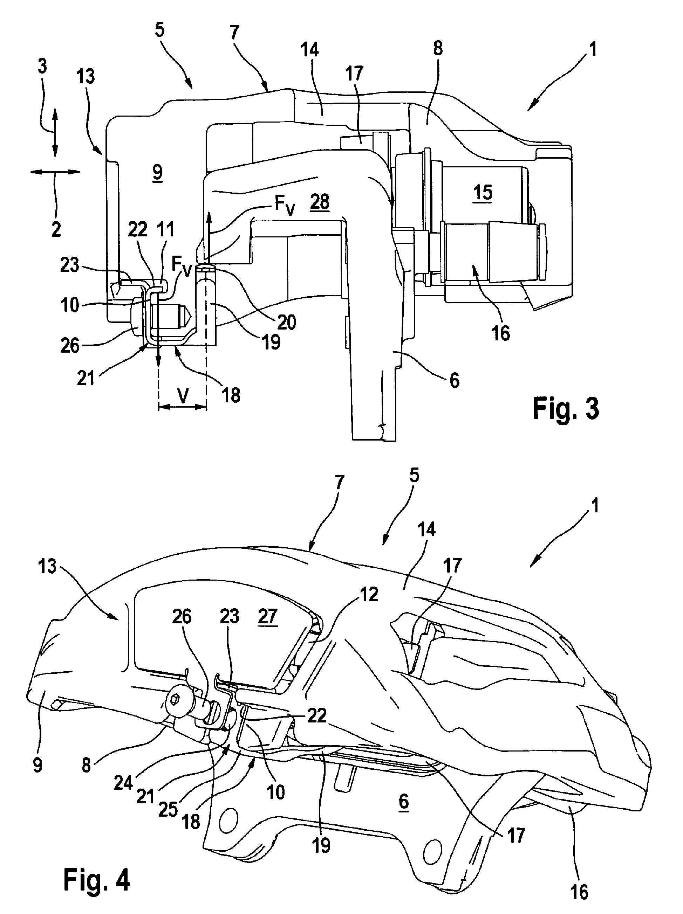

Annhand Fig. 2 und Fig. 3 wird im Folgenden die Federanordnung 18 im Detail erläutert und deren vorteilhafte Anwendungscharakteristik erklärt. Die Federanordnung 18 umfasst die zwei Federarme 19, an deren Enden in Umfangsrichtung 4 je einen Abstützwulst 20 angeordnet ist. Weiterhin ist der Befestigungsabschnitt 21 vorgesehen, der zwei in Axialrichtung 2 verlaufende Biegelippen 22, eine dazu entgegengesetzt in Axialrichtung 2 verlaufende Abstützlippe 23 und eine als Bohrung gestalteten Aufnahme 24 aufweist. Der Befestigungsabschnitt 21 ist über einen Verbindungsabschnitt 25 mit den Federarmen 19 verbunden. Dadurch ergibt sich zwischen dem Befestigungsabschnitt 21 und den Federarmen 19 ein axialer Versatz V. Da die Vorspannkraft Fᵥ zwischen den Halterarmen 28 und der Außenseite 13 des Gehäuseschenkels 9 wirksam ist, ergibt sich ein Kippmoment M_{K}, welches die Federanordnung 18 aus der montierten Position herausbewegen würde, wenn zum einen nicht die Abstützlippe 23 oder die form- bzw. reibschlüssige Verbindung mit dem Befestigungsmittel 26 bzw. der Schraube vorgesehen wäre. Dies ist in Fig. 3 näher dargestellt. Die Biegelippen 22 und die Abstützlippe 23 dienen vornehmliche der Vereinfachung der Montage der Federanordnung 19. Denn diese ermöglichen, die Federanordnung 19 auch ohne montierte Schraube 26 fest in den Bremssattel 5 einzuhängen, indem die Biegelippen 22 in die Hinterschneidung 11 im Gehäuseschenkel 9 eingreifen, und somit den Kraftfluss der Vorspannkraft Fᵥ zwischen dem Halter 6 und dem Sattelgehäuse 7 herstellen. Die Abstützlippe 23 übernimmt in diesem Zustand der Montage die Aufgabe, das durch den Versatz V verursachte Kippmoment M_{K} zu kompensieren und an dem Gehäuseschenkel 9 abzustützen. In diesem Zustand, kann der Bremssattel 5 bereits transportiert werden oder es kann in einer nachfolgenden Montagestation die Schraube 26 durch die Aufnahme 24 in den Gehäuseschenkel 9 eingeschraubt werden, ohne dass dabei die Federanordnung 18 aufwendig in Position gehalten werden müsste. Für den Betriebseinsatz des Bremssattels 5 ist diese Befestigung mittels der Schraube 26 funktionsnotwendig, da die Biegelippen 22 und die Abstützlippe 23 rein in Radialrichtung 3 und nicht in Axialrichtung 2 abstützend wirken können.

In Fig. 4 ist der Bremssattel 5 aus den Fig. 1 und Fig. 3 mit einer Schutzblende 27 teilweise in Explosionsdarstellung zu sehen. Eine derartige Schutzblende 27 dient dazu, die in dem äußeren Gehäuseschenkel 8 vorhandenen Fenster 12 zu verdecken, wodurch der Bremssattel 5 gegen unerwünschte Einflüsse besser geschützt ist, und zudem dem Bremssattel 5 ein kompakteres und weniger zerklüftetes Aussehen erhält. Es wird deutlich, dass besonders bei einer Verwendung einer Schutzblende 27 die vorteilhafte Montage der Federanordnung 18 zum tragen kommt. In diesem Fall wird die Schutzblende 27 mit demselben Befestigungsmittel 26 an dem Gehäuseschenkel 9 fixiert wie die Federanordnung 18. Wenn die Schutzblende 27 nicht einstückig mit der Federanordnung 19 ausgebildet ist, oder beide Bauteile nicht vormontiert sind, so muss die Schutzblende 27 zwingend nach der Federanordnung 19 angebracht werden. Die vorteilhafte Ausprägung des Befestigungsabschnitts 21 mit den Biege- und Abstützlippen 22,23 bewirkt, dass ab dem Zeitpunkt der Montage der Federanordnung 18 bis zum Verschrauben, die Federanordnung 18 definiert in dem Bremssattel 5 vorhanden ist.

Es ist auch denkbar, die Schutzblende 27 mit der Federanordnung 18 einstückig auszuführen oder beide vor der Endmontage miteinander durch Verkleben oder Verschweißen vorzumontieren. Zudem ist die Schutzblende 27 in vorteilhafter Weise dazu geeignet, als Darstellungsfläche für Namen, Logos, Typenbezeichnungen oder ähnliches zu fungieren.

Die in den Figuren dargestellten Merkmale sind auch untereinander kombinierbar und nicht auf die einzelnen Ausführungsbeispiele begrenzt.

### Bezugszeichenliste

- 1: Scheibenbremse
- 2: Axialrichtung
- 3: Radialrichtung
- 4: Umfangsrichtung
- 5: Bremssattel
- 6: Halter
- 7: Sattelgehäuse
- 8: inneren Gehäuseschenkel
- 9: äußeren Gehäuseschenkel
- 10: Befestigungsfläche
- 11: Hinterschneidung
- 12: Fenster
- 13: Außenseite
- 14: Gehäusebrücke
- 15: Betätigungsvorrichtung
- 16: Bolzenführung
- 17: Bremsbeläge
- 18: Federanordnung
- 19: Federarm
- 20: Abstützwulst
- 21: Befestigungsabschnitt
- 22: Biegelippe
- 23: Abstützlippe
- 24: Aufnahme
- 25: Verbindungsabschnitt
- 26: Befestigungsmittel
- 27: Schutzblende
- 28: Halterarme

- Fᵥ: Vorspannkraft
- V: Versatz
- M_{K}: Kippmoment

## Patentansprüche

1. Scheibenbremse (1) mit einer Federanordnung (18) umfassend einen Bremssattel (5) mit einem fahrzeugfesten Halter (6), an dem mindestens ein Bremsbelag (17) und ein Sattelgehäuse (7) in einer Axialrichtung (2) verschiebbar gelagert sind,
- und das Sattelgehäuse (7) einen axial inneren Gehäuseschenkel (8) und einen äußeren Gehäuseschenkel (9) aufweist,
- wobei die Federanordnung (18) zur Erzeugung einer Vorspannkraft in einer Radialrichtung (3) zwischen dem Halter (6) und dem Sattelgehäuse (7) dient,
- an einer Befestigungsfläche (10) des äußeren Gehäuseschenkels (9) vorgesehen ist
- und zwischen den Gehäuseschenkeln (8,9) derart angeordnet ist, dass ein Teil der Federanordnung (18) von dem äußeren Gehäuseschenkel (9) verdeckt ist,
- wobei die Federanordnung (18) mindestens einen hiermit einstückigen Befestigungsabschnitt (21) und einen Federarm (19) aufweist,
der Befestigungsabschnitt (21) zumindest teilweise parallel zur Befestigungsfläche (10) verläuft, welche an einer dem inneren Gehäuseschenkel (8) abgewandten Außenseite (13) des äußeren Gehäuseschenkels (9) angeordnet ist, **dadurch gekennzeichnet, dass** im äußeren Gehäuseschenkel (9) eine Hinterschneidung (11) vorgesehen ist, und dass am Befestigungsabschnitt (21) eine in Axialrichtung (2) verlaufende Biegelippe (22) und eine in der entgegengesetzten Axialrichtung (2) verlaufende Abstützlippe (23) angeordnet ist, wobei die Biegelippe (22) in die Hinterschneidung (11) eingreift und die Federanordnung (18) durch die Biegelippe (22) und die Abstützlippe (23) in Radialrichtung (3) am Sattelgehäuse (7) abgestützt, und gegen Verdrehen der Federanordnung (18) gesichert ist.

2. Scheibenbremse nach Anspruch 1, **dadurch gekennzeichnet, dass** Befestigungsmittel (26) zum Verbinden der Federanordnung (18) und der Befestigungsfläche (10) vorgehen sind.

3. Scheibenbremse nach einem oder mehreren der voran gestellten Ansprüchen, **dadurch gekennzeichnet, dass** an der dem inneren Gehäuseschenkel (8) abgewandten Außenseite (13) des äußeren Gehäuseschenkels (9) eine Schutzblende (27) angeordnet ist, die ein Fenster (12) in dem Gehäuseschenkel (9) abdeckt.

4. Scheibenbremse nach Anspruch 3, **dadurch gekennzeichnet, dass** die Schutzblende (27) und die Federanordnung (18) mit einem gemeinsamen Befestigungsmittel (26) an dem äußeren Gehäuseschenkel (9) befestigt sind.

5. Federanordnung zur Erzeugung einer Vorspannkraft zwischen einem Sattelgehäuse und einem fahrzeugfesten Halter einer Scheibenbremse, nach den Merkmalen von Anspruch 1,
- wobei die Federanordnung mindestens einen hiermit einstückigen Befestigungsabschnitt und zwei Federarme aufweist,
- der Befestigungsabschnitt eine Biegelippe umfasst, mit welcher die Federanordnung am Sattelgehäuse abstützbar ist,
- an den Federarmen ein Abstützwulst vorgesehen ist, mit welchem die Federanordnung am Halter abstützbar ist,
- wobei der Befestigungsabschnitt (21) eine Abstützlippe (23) aufweist, wobei die Abstützstützlippe (23) und die Biegelippe (22) rechtwinklig umgebogen zum Befestigungsabschnitt (21) ausgebildet sind, und wobei die Abstützlippe (23) und die Biegelippe (22) in einer Axialrichtung (2) in entgegengesetzte Richtungen weisen.

6. Federanordnung nach Anspruch 5 , **dadurch gekennzeichnet, dass** Befestigungsmittel (26) vorgesehen sind, mit welchen die Federanordnung (18) im Zusammenwirken mit dem Befestigungsabschnitt (21) an dem Sattelgehäuse (7) befestigbar ist.

7. Federanordnung nach Anspruch 6, **dadurch gekennzeichnet, dass** eine Schutzblende (27) vorgesehen ist; die im Zusammenwirken mit dem Befestigungsabschnitt (21) und den Befestigungsmitteln (26) an dem Sattelgehäuse (7) fixierbar ist, und ein Fenster (12) im Sattelgehäuse (7) abdeckt.

## Claims

1. Disc brake (1) having a spring arrangement (18), comprising a brake caliper (5) with a bracket (6) which is fixed to the vehicle and on which at least one brake pad (17) and one caliper housing (7) are mounted so as to be movable in an axial direction (2),
- and the caliper housing (7) has an axially inner housing leg (8) and an outer housing leg (9),
- wherein the spring arrangement (18) serves to generate a preload force in a radial direction (3) between the bracket (6) and the caliper housing (7),
- is provided on a fastening surface (10) of the outer housing leg (9)
- and is arranged between the housing legs (8, 9) such that a part of the spring arrangement (18) is covered by the outer housing leg (9),
- wherein the spring arrangement (18) has at least one fastening portion (21), which is in one piece therewith, and a spring arm (19),
the fastening portion (21) runs at least partially parallel to the fastening surface (10) which is arranged on an outer side (13), which faces away from the inner housing leg (8), of the outer housing leg (9), **characterized in that** an undercut (11) is provided in the outer housing leg (9), and **in that** a flexible lip (22) which runs in the axial direction (2) and a support lip (23) which runs in the opposite axial direction (2) are arranged on the fastening portion (21), wherein the flexible lip (22) engages into the undercut (11) and the spring arrangement (18) is supported against the caliper housing (7) in the radial direction (3), and secured against rotation of the spring arrangement (18), by the flexible lip (22) and the support lip (23).

2. Disc brake according to Claim 1, **characterized in that** fastening means (26) are provided for connecting the spring arrangement (18) and the fastening surface (10).

3. Disc brake according to one or more of the preceding claims, **characterized in that** a protective screen (27) is arranged on the outer side (13), which faces away from the inner housing leg (8), of the outer housing leg (9), which protective screen covers a window (12) in the housing leg (9).

4. Disc brake according to Claim 3, **characterized in that** the protective screen (27) and the spring arrangement (18) are fastened to the outer housing leg (9) by a common fastening means (26).

5. Spring arrangement for generating a preload force between a caliper housing and a bracket, which is fixed to the vehicle, of a disk brake, according to the features of Claim 1,
- wherein the spring arrangement has at least one fastening portion, which is in one piece therewith, and two spring arms,
- the fastening portion comprises a flexible lip via which the spring arrangement can be supported on the caliper housing,
- a support bead is provided on the spring arms, via which support bead the spring arrangement can be supported on the bracket,
- wherein the fastening portion (21) has a support lip (23), wherein the support lip (23) and the flexible lip (22) are formed so as to be bent at right angles with respect to the fastening portion (21), and wherein the support lip (23) and the flexible lip (22) point in opposite directions in an axial direction (2).

6. Spring arrangement according to Claim 5, **characterized in that** fastening means (26) are provided, by which fastening means the spring arrangement (18) can be fastened, in interaction with the fastening portion (21), to the caliper housing (7).

7. Spring arrangement according to Claim 6, **characterized in that** a protective screen (27) is provided which can be fixed, in interaction with the fastening portion (21) and the fastening means (26), to the caliper housing (7) and covers a window (12) in the caliper housing (7).

## Revendications

1. Frein à disque (1) doté d'un ensemble élastique (18) qui comprend un étrier de frein (5) doté d'un support (6) fixé sur le véhicule et sur lequel au moins une couche de frein (17) et un boîtier d'étrier (7) sont montés à coulissement dans une direction axiale (2),
le boîtier d'étrier (7) présentant une section axialement intérieure de boîtier (8) et une section extérieure de boîtier (9),
l'ensemble élastique (18) servant à exercer une force de précontrainte dans une direction radiale (3) entre le support (6) et le boîtier d'étrier (7),
étant prévue sur une surface de fixation (10) de la section extérieure (9) du boîtier et
étant disposée entre les sections (8, 9) du boîtier de telle sorte qu'une partie de l'ensemble élastique (18) soit recouverte par la section extérieure (9) du boîtier,
l'ensemble élastique (18) présentant au moins une partie de fixation (21) formée d'un seul tenant avec lui et un bras élastique (19),
au moins une partie de la partie de fixation (21) s'étendant parallèlement à la surface de fixation (10) située sur un côté extérieur (13), non tourné vers la section intérieure (8) du boîtier, de la section extérieure (9) du boîtier,
**caractérisé en ce que**
une contre-dépouille (11) est prévue dans la section extérieure (9) du boîtier,
**en ce qu'**une lèvre flexible (22) qui s'étend dans la direction axiale (2) et une lèvre d'appui (23) qui s'étend dans la direction axiale (2) opposée sont disposées sur la partie de fixation (21),
**en ce que** la lèvre flexible (22) s'engage dans la contre-dépouille (11) et l'ensemble élastique (18) s'appuie dans la direction radiale (3) sur le boîtier d'étrier (7) par l'intermédiaire de la lèvre flexible (22) et de la lèvre d'appui (23) et
**en ce que** l'ensemble élastique (18) est bloqué en rotation.

2. Frein à disque selon la revendication 1, **caractérisé en ce qu'**il présente des moyens de fixation (26) qui relient l'ensemble élastique (18) à la surface de fixation (10).

3. Frein à disque selon l'une ou plusieurs des revendications précédentes, **caractérisé en ce qu'**un écran de protection (27) qui recouvre une fenêtre (12) ménagée dans la section (9) du boîtier est disposé sur le côté extérieur (13), non tourné vers la section intérieure (8) du boîtier, de la section extérieure (9) du boîtier.

4. Frein à disque selon la revendication 3, **caractérisé en ce que** l'écran de protection (27) et l'ensemble élastique (18) sont fixés sur la section extérieure (9) du boîtier à l'aide d'un moyen de fixation (26) commun.

5. Ensemble élastique destiné à exercer une force de précontrainte entre un boîtier d'étrier et un support, fixé sur un véhicule, d'un frein à disque selon les caractéristiques de la revendication 1, dans lequel
- l'ensemble élastique présente au moins une partie de fixation formée d'un seul tenant avec lui, et deux bras élastiques,
- la partie de fixation comporte une lèvre flexible par laquelle l'ensemble élastique peut s'appuyer sur le boîtier d'étrier,
- un bourrelet d'appui par lequel l'ensemble élastique peut s'appuyer sur le support est prévu sur les bras élastiques,
la partie de fixation (21) présentant une lèvre d'appui (23), la lèvre d'appui (23) et la lèvre flexible (22) étant rabattues à angle droit par rapport à la partie de fixation (21), la lèvre d'appui (23) et la lèvre flexible (22) étant orientées dans des sens opposés dans la direction axiale (2).

6. Ensemble élastique selon la revendication 5, **caractérisé en ce qu'**il présente des moyens de fixation (26) par lesquels l'ensemble élastique (18) peut être fixé sur le boîtier d'étrier (7) en coopération avec la partie de fixation (21).

7. Ensemble élastique selon la revendication 6, **caractérisé en ce qu'**il présente un écran de protection (27) qui peut être fixé sur le boîtier d'étrier (7) en coopération avec la partie de fixation (21) et les moyens de fixation (26) et qui recouvre une fenêtre (12) ménagée dans le boîtier d'étrier (7).
